# EUROPÄISCHE PATENTSCHRIFT

(11) **EP 3 006 252 B1**
(45) Veröffentlichungstag und Bekanntmachung des Hinweises auf die Patenterteilung: **17.04.2019**
(21) Anmeldenummer: 15002370.3
(22) Anmeldetag: 08.08.2015
(51) Int. Cl.: B60L 1/00, B60L 11/18, H01R 25/14, H01H 85/02, B60L 3/04, H02B 1/18

(54) **HOCHVOLTVERTEILER FÜR EIN HYBRID- ODER ELEKTROFAHRZEUG**
HIGH VOLTAGE DISTRIBUTOR FOR A HYBRID OR ELECTRIC VEHICLE
DISTRIBUTEUR DE HAUTE TENSION POUR UN VEHICULE ELECTRIQUE HYBRIDE

(30) Priorität: 07.10.2014 DE 102014014925
(43) Veröffentlichungstag der Anmeldung: 13.04.2016
(73) Patentinhaber: MAN Truck & Bus AG, 80995 München (DE)
(72) Erfinder: Hessel, Marcel, 80469 München (DE); Kigin, Erdogan, 73760 Ostfildern (DE); John, Dennis, 80992 München (DE)
(74) Vertreter: v. Bezold & Partner Patentanwälte - PartG mbB

(56) Entgegenhaltungen:
- DE-U1- 29 618 834
- DE-U1- 29 918 664
- GB-A- 2 388 616
- US-A- 3 851 224
- US-A- 4 488 201
- US-A- 5 167 541
- US-B1- 6 545 861

## Beschreibung

Die Erfindung betrifft einen Hochvoltverteiler für ein Hybrid- oder Elektrofahrzeug, insbesondere für ein Nutzfahrzeug.

Ein Hochvoltverteiler (englisch "High Voltage Distribution (HVD) unit/module") ist eine Hochspannungsverteilungseinrichtung, die mittels einer Leiteranordnung zur Strom- und Spannungsverteilung ausgebildet ist. Die Funktion des Hochvoltverteilers ist die Strom- und Spannungsversorgung anderer Hochvoltkomponenten im gesamten elektrifizierten Antriebsstrang, wie z. B. elektrischer Nebenaggregate verschiedener Leistungsklassen oder Antriebseinheiten. Weiterhin ist der Hochvoltverteiler Träger von Hochvolt-Absicherungsmaßnahmen, z. B. Schmelzsicherungen, Halbleiterschutzelementen etc.. Ein solcher Hochvoltverteiler wird beispielsweise bei Hybrid- oder Elektrofahrzeugen im Hochspannungsbordnetz, an das ein elektrischer Traktionsenergiespeicher und ein elektromotorischer Antrieb angeschlossen sind, eingesetzt. Über die Leitungsanordnung des Hochvoltverteilers kann somit Energie aus dem elektrischen Energiespeicher zum Antrieb des Fahrzeugs an ein Hauptaggregat und zur Versorgung von Nebenaggregaten bereitgestellt werden. Ferner kann über die Leitungsanordnung des Hochvoltverteilers elektrische Energie aus dem Antriebsstrang aufgenommen und an den elektrischen Energiespeicher weitergeleitet werden.

Patentschrift US6545861 B1 offenbart einen Hochvolt-Verteiler für ein Elektrofahrzeug.

Da für unterschiedliche Fahrzeugvarianten unterschiedliche Konfigurationen von Hochvoltkomponenten über den Hochvoltverteiler mit Strom und Spannung versorgt werden müssen und unterschiedliche Auslegungen der Hochvolt-Absicherungsmaßnahmen vonnöten sein können, werden für die unterschiedlichen Fahrzeugvarianten jeweils unterschiedliche Hochvoltverteiler eingesetzt oder bestehende Hochvoltverteiler zeitaufwändig angepasst. Nachteilig hieran sind die damit verbundenen hohen Kosten und die große Variantenvielfalt.

Es ist somit eine Aufgabe der Erfindung, einen Hochvoltverteiler für ein Hybrid- oder Elektrofahrzeug bereitzustellen, mit dem Nachteile herkömmlicher Hochvoltverteiler vermieden werden können. Die Aufgabe der Erfindung ist es insbesondere, einen Hochvoltverteiler mit verbessertem Aufbau bereitzustellen, so dass dieser modular und flexibel einsetzbar ist. Der Hochvoltverteiler soll insbesondere einfach und schnell an die Anforderungen unterschiedlicher Fahrzeug-Varianten anpassbar sein, ohne den Grundaufbau des Hochvoltverteilers stark variieren zu müssen.

Diese Aufgaben werden durch einen Hochvoltverteiler gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Hochvoltverteiler für ein Hybrid- oder Elektrofahrzeug, insbesondere für ein Nutzfahrzeug, vorgeschlagen, der eine Trägereinrichtung und eine auf der Trägereinrichtung angeordnete, mehrere Hochvolt-Abgänge ausbildende Leiteranordnung zur Strom- und Spannungsverteilung aufweist. Ferner umfasst der Hochvoltverteiler mehrere auf der Trägereinrichtung angeordnete Halterungseinrichtungen, die jeweils einem Hochvolt-Abgang zugeordnet sind und mit einem Hochvolt-Absicherungselement bestückbar sind. Hierbei ist bei einer unbestückten Halterungseinrichtung der zugeordnete Hochvolt-Abgang nicht bestrombar, d. h., ein Hochvolt-Abgang ist nur bei eingebautem, funktionsfähigem Absicherungselement freigeschaltet.

Ein besonderer Vorzug der Erfindung liegt somit darin, dass der Hochvoltverteiler mit einer variablen Anzahl von Hochvolt-Absicherungselementen zur allpoligen Absicherung der Hochvolt-Abgänge bestückbar ist. Dies ermöglicht, den Hochvoltverteiler durch entsprechende Bestückung auf einfache Weise an die Art und Anzahl der zu versorgenden Hochvoltkomponenten anzupassen. Die Hochvolt-Absicherungselemente können beispielsweise Sicherungen, z. B. Schmelzsicherungen, und/oder Halbleiterschutzelemente etc. sein.

Die Halterungseinrichtungen weisen jeweils ein Rastermaß auf, so dass die Halterungseinrichtungen mit Hochvolt-Absicherungselementen verschiedener Bauformen und/oder Baumustergrößen bestückbar sind. Dies ermöglicht ein variables Montagemaß und eine schnelle, wenig fehleranfällige und flexible Bestückung des Hochvoltverteilers mit unterschiedlichen Konfigurationen von Absicherungselementen, um den Hochvoltverteiler für eine bestimmte Fahrzeugvariante anzupassen. Beispielsweise kann das Rastermaß so ausgeführt sein, dass in den Halterungseinrichtungen die gängigen Bauformklassen, z. B. die Bauformklassen 1 bis 4, von Hochvolt-Absicherungselementen fixierbar sind.

Das Rastermaß ist als Lochmuster ausgeführt, das in die Trägereinrichtung eingebracht ist. Ein Lochmuster ist besonders vorteilhaft zur Aufnahme und Fixierung der Drahtanschlüsse gängiger Hochvolt-Absicherungselemente. Das Lochmuster kann ein lineares Lochmuster sein, das so dimensioniert ist, dass Hochvolt-Absicherungselemente unterschiedlicher Bauformklassen an der Halterungseinrichtung befestigbar sind. Hierbei können die Löcher des Lochmusters zur Aufnahme eines Drahtanschlusses des Hochvoltabsicherungselementes ausgebildet sein und korrespondierend zu den Längen der unterschiedlichen Bauformklassen beabstandet sein. Gemäß einem weiteren Aspekt der Erfindung können die Rastermaße bzw. die Lochmuster der einzelnen Hochvoltabgänge parallel versetzt zueinander angeordnet sein.

Ferner kann die Halterungseinrichtung so ausgeführt sein, dass ein erster Montagepunkt für ein Hochvolt-Absicherungselement fix auf der Trägereinrichtung ist und der zweite Montagepunkt durch das Rastermaß bzw. das Lochmuster variabel ist.

Gemäß einer weiteren, besonders bevorzugten Ausgestaltungsform ist die Leiteranordnung auf einer ersten Seite der Trägereinrichtung angeordnet und die Halteeinrichtungen sind so ausgeführt, dass die Trägereinrichtung auf der zur ersten Seite gegenüberliegenden Seite der Trägereinrichtung mit den Hochvolt-Absicherungselementen bestückbar ist. Auf der einen Seite des Hochvoltverteilers sind somit nur die Hochvolt-Absicherungselemente und die entsprechenden Anschlüsse, Fixierelemente etc. angeordnet, während auf der gegenüberliegenden Seite des Hochvoltverteilers die Leiterbahnen inkl. der Verschaltung und Verbindungstechnik für die Hochvoltabgänge (Hochvoltschnittstellen) angeordnet sind. Die erhöht die Handhabungssicherheit, da das Risiko, bei der Bestückung des Hochvoltverteilers mit Hochvolt-Absicherungselementen versehentlich eine Leiterbahn zu berühren, reduziert wird. Ein weiterer Vorteil ist die verbesserte Service-Freundlichkeit, insbesondere wenn der Hochvoltverteiler in das Gehäuse einer Traktionsenergiespeichereinrichtung integriert wird, was nachfolgend noch erläutert wird.

Die Leiteranordnung kann mehrere parallele Hochvoltabgänge umfassen, die jeweils aus einer Plusleitung und einer Minusleitung gebildet werden, die jeweils im Bereich der Halteeinrichtung unterbrochen sind, wobei sowohl die Plusleitung als auch die Minusleitung ein Rastermaß zur Bestückung mit einem Hochvolt-Absicherungselement aufweisen.

Die Trägereinrichtung kann einen U-förmigen Querschnitt mit einem Mittelteil und seitlichen Schenkeln aufweisen, wobei die Halteeinrichtungen am Mittelteil zwischen den seitlichen Schenkeln auf derjenigen Seite des Mittelteils angeordnet sind, von der sich die Schenkel wegerstrecken. Eine derartige Form ist besonders vorteilhaft, um den Hochvoltverteiler in ein Gehäuse einer Traktionsenergiespeichereinrichtung zu integrieren.

Die Leiteranordnung kann als Stromschienenanordnung oder Leiterplattensystem ausgeführt sein. Die Trägereinrichtung kann ein Formteil sein. Die Trägereinrichtung kann auch als Platine ausgeführt sein, wobei die Leiteranordnung als Leiterbahnen der Platine ausgeführt ist.

Hybrid-, Plug-In-Hybrid- und Elektrofahrzeuge verfügen über einen elektrischen Traktionsenergiespeicher zur Versorgung eines elektromotorischen Antriebs des Fahrzeugs. Der Traktionsenergiespeicher kann auch zur Aufnahme von Rekuperationsenergie ausgeführt sein. Traktionsenergiespeicher können beispielsweise auf Basis von Akkumulatoren, z. B. Li-Ionen-Batterien, oder auf Basis von Kondensatorspeichern (z. B. Ultracap-Speichern) gebildet sein. Typischerweise ist das in dem Traktionsenergiespeicher enthaltene Energiespeichermodul modular aufgebaut, wobei einzelne Energiespeicherzellen zu sog. Speicherpacks zusammengefasst werden.

Aus der Praxis ist es ferner bekannt, eine Batterie-Schützbox (englisch "battery junction box") in den Traktionsenergiespeicher zu integrieren. Die Schützbox für Hochvolt(HV)-Traktionsenergiespeicher besteht aus Trennelementen und Absicherungen, um den spannungsführenden Teil des Traktionsenergiespeichers vom Hochvolt(HV)-Bordnetz zu trennen. Derartige als Schützbox bezeichnete Vorrichtungen stellen sicher, dass keine gefährliche Spannung an den berührungsgefährdeten Teilen, wie etwa von außen zugänglichen Kontakten etc., anliegt.

Die Erfindung betrifft ferner eine derartige Traktionsenergiespeichereinrichtung für ein Hybrid- oder Elektrofahrzeug mit zusätzlich integriertem Hochvoltverteiler. Gemäß einem weiteren Aspekt der Erfindung wird somit eine Traktionsenergiespeichereinrichtung vorgeschlagen, aufweisend ein Speichermodul zur Speicherung elektrischer Energie, eine mit dem Speichermodul verbundene Schützbox und einen Hochvoltverteiler wie vorstehend offenbart, die in ein Gehäuse der Traktionsenergiespeichereinrichtung integriert sind, wobei mehrere am Gehäuse angeordnete Hochvolt-Anschlüsse mit dem Hochvoltverteiler und/oder mit der Schützbox elektrisch verbunden sind. Die Integration des Hochvoltverteilers in das Systemgehäuse der Speichereinrichtung führt zu einer Reduktion des Verkabelungsaufwandes beim Anschluss der Speichereinrichtung und zum Entfall von Steckern und eines separaten Gehäuses für den Hochvoltverteiler. Ferner kann der Hochvoltverteiler bereits separat vormontiert und im Traktionsenergiespeicher verbaut werden, so dass eine schnellere Endmontage des Energiespeichers, z. B. an einem LKW oder einem Bus, ermöglicht wird.

Bei einer vorteilhaften Variante ist eine Ausführungsform des Hochvoltverteilers, bei der die Leiteranordnung auf einer ersten Seite der Trägereinrichtung angeordnet ist und die Halteeinrichtungen so ausgeführt sind, dass die Trägereinrichtung auf der zur ersten Seite gegenüberliegenden Seite der Trägereinrichtung mit den Hochvolt-Absicherungselementen bestückbar ist und/oder bestückt ist, im Bereich einer Gehäusewand angeordnet. Hierbei ist die mit den Hochvolt-Absicherungselementen bestückbare Seite der Trägereinrichtung der Gehäusewand zugewandt. Ferner ist diese Gehäusewand oder zumindest ein Teil davon abnehmbar ausgeführt. Beispielsweise kann der abnehmbare Teil der Gehäusewand als Wartungsklappe oder als verschraubbare Abdeckplatte ausgeführt sein. Diese Variante zeichnet sich durch eine hohe Wartungsfreundlichkeit aus, da defekte Sicherungen des montierten Hochvoltverteilers oder Änderungen der Bestückung leicht durchführbar sind.

Für die leichtere Integration in das Gehäuse kann der Hochvoltverteiler mindestens eine zur Anlage auf eine Gehäusewand bestimmte erste Fläche umfassen, die mindestens eine Durchgangsöffnung aufweist, über die der Hochvoltverteiler mit der Gehäusewand verschraubbar ist und/oder verschraubt ist, um den Hochvoltverteiler im Gehäuse festzulegen.

Eine weitere Möglichkeit der erfindungsgemäßen Realisierung sieht vor, dass der Hochvoltverteiler gemäß der Variante mit U-förmigem Querschnitt der Trägereinrichtung mittels der beiden Schenkel der Trägereinrichtung so am Gehäuse befestigt ist, dass der die Halteeinrichtungen aufweisende Bereich der Trägereinrichtung gegenüberliegend zu dem abnehmbar ausgeführten Teil der Gehäusewand angeordnet ist.

Ein weiterer Aspekt der Erfindung betrifft ein Fahrzeug, insbesondere ein Nutzfahrzeug, mit einem Hochvoltverteiler wie hierin offenbar und/oder mit einer Traktionsenergiespeichereinrichtung wie hierin offenbart.

Weitere Einzelheiten und Vorteile der Erfindung werden im Folgenden unter Bezug auf die beigefügten Zeichnungen beschrieben. Es zeigen:
- Figur 1: ein Blockschaltbild einer Traktionsenergiespeichereinrichtung gemäß einem Ausführungsbeispiel;
- Figur 2: ein Blockschaltbild einer Anordnung eines Hochvoltverteilers zwischen einer Batterieschützbox und den Hochvolt-Anschlüssen am Gehäuse der Traktionsenergiespeichereinrichtung gemäß einem Ausführungsbeispiel;
- Figur 3: eine Draufsicht auf die die Leiteranordnung aufweisende Seite des Hochvoltverteilers gemäß einem Ausführungsbeispiel;
- Figur 4: einen Schnitt A-A des Hochvoltverteilers gemäß einem Ausführungsbeispiel; und
- Figur 5: eine weitere Schnittansicht des Hochvoltverteilers gemäß einem Ausführungsbeispiel.

Gleiche oder funktional äquivalente Elemente sind in allen Figuren mit denselben Bezugszeichen bezeichnet.

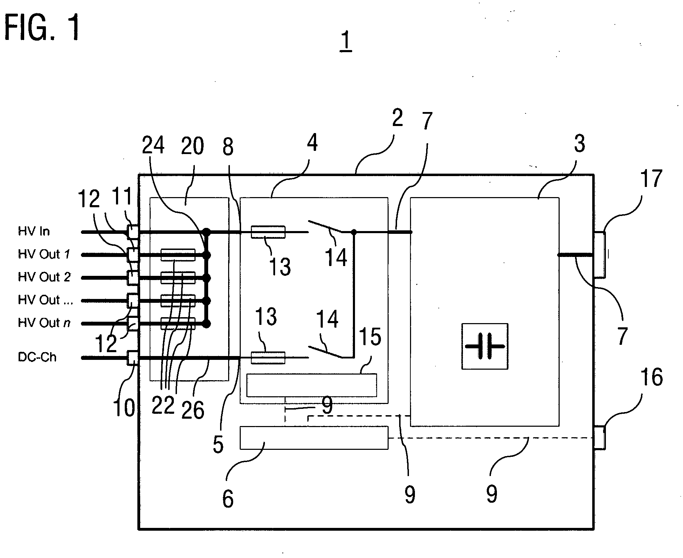

Figur 1 illustriert eine Traktionsenergiespeichereinrichtung mit integriertem Hochvoltverteilergemäß einem Ausführungsbeispiel anhand eines Blockschaltbildes. Der Traktionsenergiespeicher 1 umfasst ein Systemgehäuse 2, in das die nachfolgend beschriebenen Komponenten integriert sind. In dem Gehäuse 2 befindet sich ein Speichermodul für elektrische Energie 3, das wiederum selbst von einem Gehäuse umhaust ist (nicht dargestellt). Dieses Speichermodul 3 kann als Li-Ionen oder/und als Ultracap-Speicher ausgeführt sein. Das Speicherelement 3 ist aus einzelnen Zellen aufgebaut, die wiederum zu einem Energiespeicherpack zusammengeschaltet sind. Ferner sind Kühlplatten zur Kühlung des Speichermoduls vorgesehen (nicht gezeigt).

In dem Gehäuse 2 der Traktionsenergiespeichereinrichtung 1 ist ferner ein Batteriemanagementsystem 6 integriert, das über eine Signalleitung 9 die Lade- und Entladevorgänge des Speichermoduls 3 steuert. Derartige Batteriemanagementsysteme 6 und Speichermodule 3 sind an sich aus dem Stand der Technik bekannt und müssen hier nicht näher beschrieben werden.

Die gestrichelten Linien stellen Signalleitungen, die fett schwarz gezeichneten Linien Hochspannungsleitungen dar. Das Batteriemanagementsystem 6 ist über eine Signalleitung 9 mit einer Schnittstelle 16 verbunden, über die das Batteriemanagementsystem 6 Steuersignale und Sensordaten empfangen kann. Der Speicher 3 für elektrische Energie ist über eine Hochspannungsleitung 7 mit einem Hochspannungstrennschalter 17 (englisch "high voltage service disconnect") verbunden.

Der Hochspannungstrennschalter 17 dient zu Wartungs- und Servicezwecken am elektrischen Antriebssystem und garantiert die Spannungsfreiheit am Fahrzeug, beispielsweise als Ausführung eines HV-Steckerkontaktes. Durch das Öffnen dieses Trennschalters 17 wird der HV-Pfad in den Speicherelementen 3 unterbrochen und durch Zusatzfunktionalitäten z. B. die Ansteuerung der Hauptschütze 14 unterbrochen, so dass diese nicht schließen können. Die Traktionsenergiespeichereinrichtung 1 ist somit vom Hochspannungs-Bordnetz getrennt. In dem Systemgehäuse 2 des Traktionsenergiespeichers 1 ist ferner eine HV-Batterie-Schützbox 4 integriert. Es wurde vorstehend bereits erwähnt, dass die Schützbox Absicherungen 22 und Trennelemente bzw. elektrische Schalter 14 umfasst, um den spannungsführenden Teil des Traktionsenergiespeichers 1 vom Hochspannungs-Bordnetz zu trennen.

In der Schützbox ist ferner ein Steuergerät 15 verbaut, das von dem Batteriemanagementsystem 6 über eine Signalleitung 9 gesteuert werden kann. Das Steuergerät 15 enthält die Leistungselektronik zur Steuerung der Trennelemente 14.

Die Absicherungen 22 sind Sicherungen, z. B. in der vorliegenden Ausführung als Schmelzsicherungen ausgeführt, welche im Fehlerfall eines Kurzschlusses im System durchschmelzen und somit den Traktionsspeicher vom HV-Bordnetz trennen.

In dem Systemgehäuse 2 des Traktionsenergiespeichers 1 ist ferner ein Hochvoltverteiler 20 integriert. Der Hochvoltverteiler 20 dient zur Strom- und Spannungsversorgung anderer Hochvoltkomponenten im gesamten elektrifizierten Antriebsstrang, wie z. B. elektrischer Nebenaggregate verschiedener Leistungsklassen oder Antriebseinheiten. Weiterhin ist der Hochvoltverteiler Träger von Hochvolt-Absicherungsmaßnahmen 22, z. B. Schmelzsicherungen, Halbleiterschutzelementen etc..

Der Hochvoltverteiler 20 ist, wie in Figur 1 gezeigt, direkt in das Gehäuse 2 der Traktionsenergiespeichereinrichtung 1 integriert. Je nach Fahrzeuganforderungen können hiermit eine variable Anzahl von Leistungs- und Nebenaggregatsschnittstellen jeweils inkl. Absicherung 22 in das Systemgehäuse 2 der Traktionsenergiespeichereinrichtung 1 integriert werden. Hierzu sind an einer Gehäusewand des Gehäuses 2, die benachbart zu der Hochspannungsverteilungseinrichtung 20 ist, ein Hochspannungseingang 11 und eine Vielzahl von Hochspannungsausgängen 12 angeordnet. Die Anzahl von Hochspannungsausgängen 12 ist abhängig von der Anzahl der benötigten Leistungs- und Nebenaggregatsschnittstellen. In einer geöffneten Stellung des oberen Trennschalters 14 der Schützbox ist der Energiespeicher 3 von der Hochspannungsverteilereinrichtung 20 getrennt.

Für Hybrid- und Elektrofahrzeuge ist es vorteilhaft, das Fahrzeug durch die Infrastruktur zur Reichweitenverlängerung laden zu können. Dafür steht im Ausführungsbeispiel der Figur 1 eine Gleichstromladeschnittstelle zur Verfügung. Die Schnittstelle beziehungsweise das Kontaktierungssystem für das Gleichstromladen erfolgt hierfür über eine Ladebuchse 10, die am Gehäuse 2 der Traktionsenergiespeichereinrichtung 1 vorgesehen ist. Ferner ist die Batterie-Schützbox mit einer Absicherung 13 und einem in Serie zur Absicherung 13 angeordneten Schalter 14 erweitert. Hierbei ist die Gleichstromladebuchse 10 über eine Hochspannungsleitung 26 der Hochvoltverteiler 20 mit der Absicherung 13 und dem Trennschalter 14 in der Batterie Schützbox 4 verbunden, so dass wiederum der vorhandene Hochvoltverteiler 20 genutzt werden kann.

Es ist jegliche Kombination der Schaltungszustände in der Schützbox 4 denkbar, d. h., jeder der Schalter 14 kann unabhängig von dem anderen Schalter 14 offen oder geschlossen sein. Die Hochvoltverteilung (HVD) kann z. B. Energie aus dem Antriebsstrang über den Eingang "HV In" 11 aufnehmen als auch Energie an z. B. Nebenaggregate über die Ausgänge "HV Out" 12 liefern.

Hierbei ist zu erwähnen, dass die beiden dargestellten Trennelemente 14 jeweils zwei Trennelemente/Schütze umfassen, da ein Schütz für das Schalten/Trennen des Hochvolt-Pluspfades und ein Schütz für den Hochvolt-Minuspfad benötigt wird. In Summe sind in der Schützbox 4 somit vier Trennelemente 14 vorgesehen, wobei zur Vereinfachung der Darstellung nur zwei dargestellt sind. Ebenfalls sind die Hochspannungsleitungen zweipolig ausgeführt, umfassen also eine Minus- und eine Plusleitung, was in den nachfolgenden Figuren dargestellt ist.

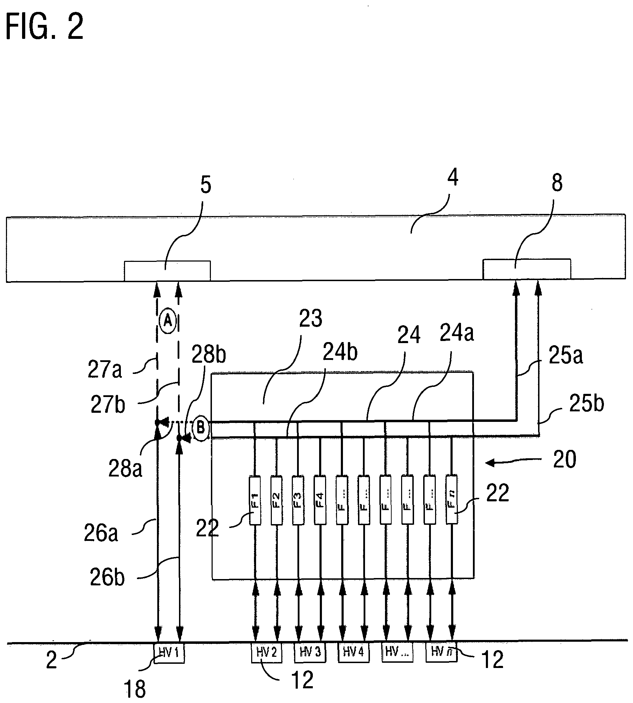

Dies ist beispielweise in der Figur 2 erkennbar, die einen Ausschnitt der Figur 1 zeigt. Die Hauptleitung 24 des Hochvoltverteilers 20 besteht aus einer Hauptplusleitung 24a und einer Hauptminusleitung 24b, die über die Leitungen 25a und 25b mit dem Eingang 8 der Schützbox 4 verbunden sind. Die Leitung 26, über die die Gleichstromladebuche 10 mit dem weiteren Eingang 5 der Schützbox verbunden ist, umfasst ebenfalls eine Plusleitung 26a und eine Minusleitung 26b.

Figur 2 illustriert ferner zwei unterschiedliche Ausführungsvarianten A und B. Im Anwendungsfall B dient der Hochvoltanschluss 18 als Hochvoltabgang, der aus oder durch den Hochvoltverteiler 20 versorgt wird. In diesem Fall ist die Leitung 26a über die Leitung 28a mit der Leitung 24a des Hochvoltverteilers 20 verbunden. Ebenso wäre die Leitung 26b über die Leitung 28b mit der Leitung 24b verbunden. Die gestrichelten Hochvoltlinien 27a und 27b sind dann nicht vorhanden.

Wird jedoch eine DC-Schnellladeschnittstelle benötigt, z. B. bei einem Plug-In-HybridFahrzeug, kann gemäß Anwendungsfall B der Hochvoltanschluss 18 als DC-Schnellladeschnittstelle ausgeführt sein und bildet einen Hochvolteingang aus. Hierbei wären dann die Leitungen 26a und 26b nicht mit dem Hochvoltverteiler 20, sondern direkt mit dem Eingang 5 der Batterie-Schützbox 4 verbunden (dargestellt durch die gestrichelten Hochvoltlinien 27a und 27b).

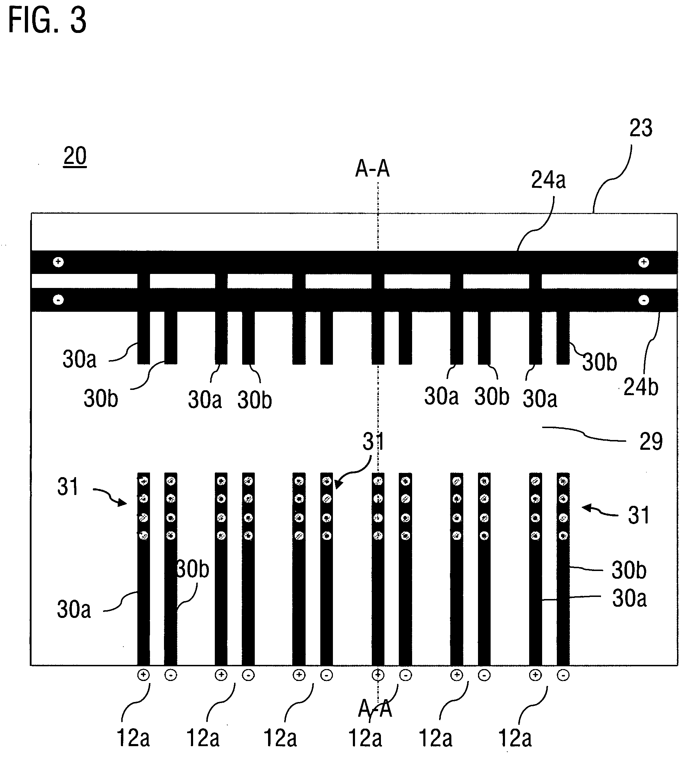

Figur 3 zeigt ein Ausführungsbeispiel eines Hochvoltverteilers 20. In Figur 3 ist eine Oberseite des Hochvoltverteilers 20 gezeigt. Der Hochvoltverteiler umfasst ein Formteil 23 als Träger für die Leiteranordnung und die Hochvoltsicherungen. Die Leiteranordnung kann beispielsweise als eine Stromschienenanordnung oder als Leiterplattensystem ausgeführt sein; mit einer Hauptplusleitung 24a und einer Hauptminusleitung 24a, die parallel zueinander quer zum Träger 23 verlaufen. Zur Ausbildung mehrerer Hochvoltabgänge 12a zweigen von den Hauptleitungen in Parallelschaltung jeweils paarweise Hochvoltleitungen 30a, 30b ab, wobei 30a wiederum eine Plusleitung ist und 30b eine Minusleitung ist. Jedes Paar bildet einen Hochvoltabgang, über den der Hochvoltabgänge 12a mit Strom und Spannung versorgt werden kann.

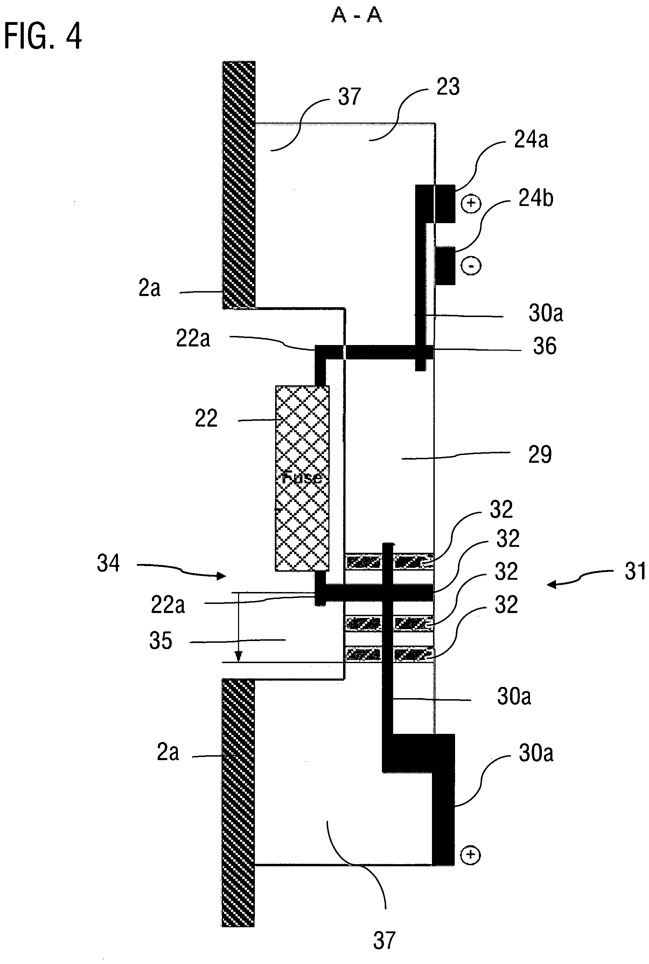

In Figur 3 ist ferner erkennbar, dass im Bereich 29 die Hochvoltleitungen 30a, 30b unterbrochen sind. An dieser Stelle ist der Hochvoltabgang allpolig abgesichert, d. h., Leiterenden der Plusleitung 30a als auch der Minusleitung 30b werden im Bereich 29 mit mindestens einer Sicherung verbunden. Figur 3 zeigt ferner ein Lochmuster zur Befestigung dieser Sicherungen. Die Sicherungen sind in Figur 3 nicht sichtbar, da diese vorteilhafterweise auf der Unterseite des Hochvoltverteilers 20 angeordnet werden. Dies ist in Figur 4 dargestellt.

Figur 4 zeigt einen Schnitt A-A des Hochvoltverteilers gemäß einem Ausführungsbeispiel.

Die Leiteranordnung 24a, 24b, 30a, 30b und die Sicherungen 22 sind auf unterschiedlichen Seiten des Trägers 23 angeordnet. Der Träger 23 des Hochvoltverteilers 20 hat einen U-förmigen Querschnitt mit einem Mittelteil 29 und seitlichen Schenkeln 37. Zur Befestigung der Sicherung 22 ist eine Halteeinrichtung 34 am Mittelteil 29 vorgesehen. Die Halteeinrichtung 34 umfasst das Lochmuster 31 sowie einen oberen Montagepunkt 36, mit einer Durchgangsbohrung durch den Träger 23 an dieser Stelle. Am oberen Montagepunkt wird ein Drahtanschluss 22a der Sicherung 22 durch die Durchgangsbohrung geführt und am Montagepunkt 36 fixiert, z. B. durch eine Steckverbindung, Verschrauben, oder Verlöten etc.. Am unteren Montagpunkt wird der zweite Drahtanschluss 22a in das passende Loch 32 des Lochmusters 31 eingeführt und ebenfalls fixiert. Im Bereich 35 des Lochmusters 31 ist ein Freiraum vorgesehen, um ein variables Montagemaß realisieren zu können. Bei einer längeren Sicherung wird der untere Drahtanschluss 22a entsprechend in ein weit unten liegendes Loch 32 des Lochmusters 31 eingesteckt. Aufgrund des Lochmusters kann die Halteeinrichtung 34 mit Sicherungen unterschiedlicher Bauformklassen, d. h. Sicherungen unterschiedlicher Länge und Breite, bestückt werden. Erst mit Bestücken eines Hochvoltabgangs 30a, 30b mit einer Sicherung 22 wird dieser freigeschaltet und somit der Hochvoltabgang 12a bestrombar.

Je nach Bestückungsvariante des Hochvoltverteilers können somit in Abhängigkeit der Freiplätze, d. h. nicht mit Sicherungen bestückter Hochvoltabgänge, eine unterschiedliche Zahl von Hochvoltschnittstellen bereitgestellt werden. In Verbindung mit dem Schienen- bzw. Leiterplattensystem des Hochvoltverteilers kann der Hochvoltverteiler für verschiedene Fahrzeugvarianten einfach konfiguriert und angepasst werden, ohne den Grundaufbau verändern zu müssen.

In Figur 4 ist mit dem Bezugszeichen 2a eine Gehäusewand 2a des Gehäuses 2 der Traktionsenergiespeichereinrichtung bezeichnet. Der Hochvoltverteiler 20 ist somit im Bereich der Gehäusewand 2a angeordnet, wobei die mit den Hochvolt-Absicherungselementen 22 bestückbare Seite der Trägereinrichtung 23 der Gehäusewand 2 zugewandt ist. Die Gehäusewand 2a oder zumindest ein Teil 38 davon ist abnehmbar ausgeführt.

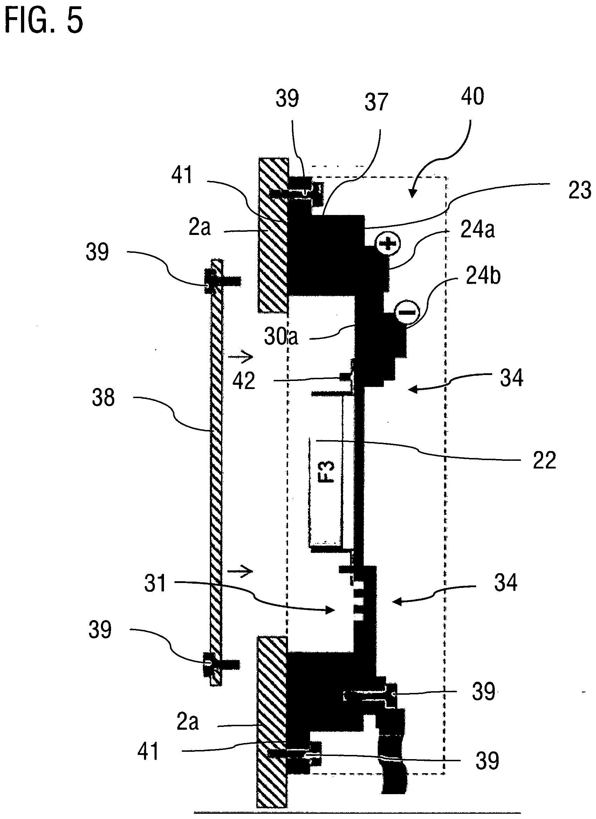

Dies ist in Figur 5 anhand einer weiteren Ausführungsvariante gezeigt. Der Hochvoltverteiler 40 weist eine zur Anlage auf die Gehäusewand 2a bestimmte Fläche 41 auf, die vorliegend der Endfläche der seitlichen Schenkel 37 des Trägers 23 entspricht und die mindestens eine Durchgangsöffnung aufweist, über die der Hochvoltverteiler 40 mit der Gehäusewand 2a durch die Schraube 39 verschraubt ist, um den Hochvoltverteiler im Gehäuse 2 festzulegen. Im Bereich der Sicherungen 22 weist das Gehäuse 22 eine abnehmbare Platte 38 auf. Durch Lösen der Verschraubung 39 kann die Platte 38 entfernt werden. Durch die vorteilhafte Ausführung und Anordnung des Hochvoltverteilers 40 kann der Hochvoltverteiler 20 auch im bereits verbauten Zustand mit Sicherungen 22 bestückt werden bzw. können diese im Fehlerfall leichter getauscht werden. Ferner ist zu erwähnen, dass bei der Ausführungsvariante der Figur 5 die Halteeinrichtung 34 zur Ausbildung des oberen Montagepunktes so ausgeführt ist, dass ein Leiterendabschnitt 42 durch den Träger 23 zur Seite der Sicherungen hindurchtritt und ein Drahtanschlussabschnitt der Sicherung 22 auf den Leiterendabschnitt 42 aufgesteckt wird.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Traktionsenergiespeicher
- 2: Gehäuse
- 2a: Gehäusewand
- 3: Batteriezellenpack, Speichermodul
- 4: Schützbox
- 5, 8: Eingang Schützbox
- 6: Batteriemanagement
- 7: Hochspannungsleiter
- 9: Signalleitung
- 10: Hochspannungsgleichstromladebuchse
- 11, 18: Hochspannungseingang
- 12: Hochspannungsausgang 1 ... n
- 12a: Hochvoltabgang
- 13: Absicherung
- 14: Schalter
- 15: Steuereinheit der Schützbox
- 16: Anschlussbuchse für Steuerleitungen
- 17: Hochspannungstrennschalter (HV service disconnect)
- 20, 40: Hochvoltverteiler
- 22: Absicherung
- 22a: Anschlussdraht
- 23: Trägereinrichtung (Träger)
- 24, 24a, 24b: Hochspannungsleiter
- 25a, 25b: Hochspannungsleiter
- 26, 26a, 26b: Hochspannungsleiter
- 27a, 27b: Hochspannungsleiter
- 28a, 28b: Hochspannungsleiter
- 29: Mittelteil
- 30a, 30b: Hochspannungsleiter
- 31: Lochmuster
- 32: Loch des Lochmusters
- 34: Halterungseinrichtung
- 35: Freiraum für variables Montagemaß
- 36: Oberer Montagepunkt
- 37: Schenkel
- 39: Schraube
- 41: Fläche
- 42: Leiterendabschnitt

## Patentansprüche

1. Hochvoltverteiler (20; 40) für ein Hybrid- oder Elektrofahrzeug, umfassend
eine Trägereinrichtung (23);
eine auf der Trägereinrichtung (23) angeordnete Leiteranordnung (24a, 24b, 30a, 30b) zur Strom- und Spannungsverteilung, um mehrere Hochvolt-Abgänge (12a) auszubilden;
mehrere auf der Trägereinrichtung (23) angeordnete Halterungseinrichtungen (34), die jeweils einem Hochvolt-Abgang (12a) zugeordnet sind und mit einem Hochvolt-Absicherungselement (22) bestückbar sind, wobei bei einer unbestückten Halterungseinrichtung (34) der zugeordnete Hochvolt-Abgang (12a) nicht bestrombar ist; **dadurch gekennzeichnet, dass** die Halterungseinrichtungen (34) ein Rastermaß aufweisen, so dass die Halterungseinrichtungen (34) mit Hochvolt-Absicherungselementen (22) verschiedener Bauformen und/oder Baumustergrößen bestückbar sind, und dass das Rastermaß als Lochmuster (31) ausgeführt ist, das in die Trägereinrichtung (23) eingebracht ist.

2. Hochvoltverteiler (20; 40) nach Anspruch 1, **dadurch gekennzeichnet, dass** die Leiteranordnung (24a, 24b, 30a, 30b) auf einer ersten Seite der Trägereinrichtung (23) angeordnet ist und dass die Halterungseinrichtungen (34) so ausgeführt sind, dass die Trägereinrichtung (23) auf der zur ersten Seite gegenüberliegenden Seite der Trägereinrichtung (23) mit den Hochvolt-Absicherungselementen (22) bestückbar ist und/oder bestückt ist.

3. Hochvoltverteiler (20; 40) nach Anspruch 1 oder 2, **dadurch gekennzeichnet, dass** das Lochmuster (31) ein lineares Lochmuster ist, das so dimensioniert ist, dass Hochvolt-Absicherungselemente (22) unterschiedlicher Bauformklassen an der Halterungseinrichtung (34) befestigbar sind.

4. Hochvoltverteiler (20; 40) nach einem der vorhergehenden Ansprüche, **dadurch gekennzeichnet, dass** die Trägereinrichtung (23) einen U-förmigen Querschnitt mit einem Mittelteil (29) und seitlichen Schenkeln (37) aufweist, wobei die Halterungseinrichtungen (34) am Mittelteil zwischen den seitlichen Schenkeln (37) auf derjenigen Seite des Mittelteils angeordnet sind, von der sich die Schenkel (37) wegerstrecken.

5. Hochvoltverteiler (20; 40) nach einem der vorhergehenden Ansprüche, **dadurch gekennzeichnet,**
(a) **dass** die Leiteranordnung (21) als Stromschienenanordnung oder Leiterplattensystem ausgeführt ist; und/oder
(b) **dass** die Trägereinrichtung (23) ein Formteil aufweist; und/oder
(c) **dass** die Trägereinrichtung (23) als Platine ausgeführt ist und dass die Leiteranordnung (21) als Leiterbahnen der Platine ausgeführt sind; und/oder
(d) **dass** die Hochvolt-Absicherungselemente (22) Sicherungen, weiter vorzugsweise Schmelzsicherungen, und/oder Halbleiterschutzelemente aufweisen.

6. Traktionsenergiespeichereinrichtung (1) für ein Hybrid- oder Elektrofahrzeug, aufweisend
ein Speichermodul (5) zur Speicherung elektrischer Energie,
eine mit dem Speichermodul verbundene Schützbox (4); und
einen Hochvoltverteiler (20; 40) nach einem der vorhergehenden Ansprüche, die in ein Gehäuse (2) der Traktionsenergiespeichereinrichtung (1) integriert sind, wobei mehrere am Gehäuse (2) angeordnete Hochvolt-Anschlüsse (12) mit dem Hochvoltverteiler (20; 40) und/oder mit der Schützbox (4) elektrisch verbunden sind.

7. Traktionsenergiespeichereinrichtung nach Anspruch 6, **dadurch gekennzeichnet,**
(a) **dass** der Hochvoltverteiler (20; 40) nach einem der Ansprüche 2 bis 5 im Bereich einer Gehäusewand (2a) angeordnet ist, wobei die mit den Hochvolt-Absicherungselementen (22) bestückbare Seite der Trägereinrichtung (23) der Gehäusewand (2) zugewandt ist; und
(b) **dass** diese Gehäusewand (2a) oder zumindest ein Teil (38) davon abnehmbar ausgeführt ist.

8. Traktionsenergiespeichereinrichtung nach Anspruch 7, **dadurch gekennzeichnet,**
(a) **dass** der Hochvoltverteiler (20; 40) mindestens eine zur Anlage auf eine Gehäusewand (2a) bestimmte erste Fläche (41) umfasst, die mindestens eine Durchgangsöffnung aufweist, über die der Hochvoltverteiler (20; 40) mit der Gehäusewand (2a) verschraubt ist, um den Hochvoltverteiler im Gehäuse (2) festzulegen; und/oder
(b) **dass** der Hochvoltverteiler gemäß Anspruch 6 mittels der beiden Schenkel (37) der Trägereinrichtung (23) so am Gehäuse (2) befestigt ist, dass der die Halteeinrichtungen (34) aufweisende Bereich der Trägereinrichtung (23) gegenüberliegend zu dem abnehmbar ausgeführten Teil (38) der Gehäusewand (2a) angeordnet ist.

9. Nutzfahrzeug mit einem Hochvoltverteiler gemäß einem der Ansprüche 1 bis 5 und/oder mit einer Traktionsenergiespeichereinrichtung gemäß einem der Ansprüche 6 bis 8.

## Claims

1. A high-voltage distributor (20; 40) for a hybrid or electric vehicle, comprising
a carrier device (23);
a conductor arrangement (24a, 24b, 30a, 30b), which is arranged on the carrier device (23), for current and voltage distribution in order to form a plurality of high-voltage outgoers (12a);
a plurality of holding devices (34) which are arranged on the carrier device (23) and are associated with a high voltage outgoer (12a) in each case and can be fitted with a high-voltage fuse-protection element (22), wherein the current cannot be applied to the associated high-voltage outgoer (12a) when a holding device (34) is not fitted, **characterized in that** the holding devices (34) have a grid spacing, so that the holding devices (34) can be fitted with high-voltage fuse-protection elements (22) of different designs and/or prototype sizes, and **in that** the grid spacing is designed as a hole pattern (31) which is made in the carrier device (23).

2. The high-voltage distributor (20; 40) according to Claim 1, **characterized in that** the conductor arrangement (24a, 24b, 30a, 30b) is arranged on a first side of the carrier device (23), and **in that** the holding devices (34) are designed such that the carrier device (23) can be fitted and/or is fitted with the high-voltage fuse-protection elements (22) on that side of the carrier device (23) which is opposite the first side.

3. The high-voltage distributor (20; 40) according to Claim 1 or 2, **characterized in that** the hole pattern (31) is a linear hole pattern which is dimensioned such that high-voltage fuse-protection elements (22) of different design classes can be fastened to the holding device (34) .

4. The high-voltage distributor (20; 40) according to one of the preceding claims, **characterized in that** the carrier device (23) has a U-shaped cross section with a central part (29) and lateral limbs (37), wherein the holding devices (34) are arranged on the central part between the lateral limbs (37) on that side of the central part from which the limbs (37) extend away.

5. The high-voltage distributor (20; 40) according to one of the preceding claims, **characterized**
(a) **in that** the conductor arrangement (21) is designed as a busbar arrangement or printed circuit board system; and/or
(b) **in that** the carrier device (23) has a shaped part; and/or
(c) **in that** the carrier device (23) is designed as a printed circuit board, and in that the conductor arrangement (21) is designed as conductor tracks of the printed circuit board; and/or
(d) **in that** the high-voltage fuse-protection elements (22) have fuses, further preferably safety fuses, and/or semiconductor protection elements.

6. A traction energy storage device (1) for a hybrid or electric vehicle, having
a storage module (5) for storing electrical energy,
a contactor box (4) which is connected to the storage module; and
a high-voltage distributor (20; 40) according to one of the preceding claims, which are integrated into a housing (22) of the traction energy storage device (1), wherein a plurality of high-voltage connections (12) which are arranged on the housing (2) are electrically connected to the high-voltage distributor (20; 40) and/or to the contactor box (4).

7. The traction energy storage device according to Claim 6, **characterized**
(a) **in that** the high-voltage distributor (20; 40) according to one of Claims 2 to 5 is arranged in the region of a housing wall (2a), wherein that side of the carrier device (23) which can be fitted with the high-voltage fuse-protection elements (22) faces the housing wall (2); and
(b) **in that** this housing wall (2a) or at least a portion (38) thereof is of removable design.

8. The traction energy storage device according to Claim 7, **characterized**
(a) **in that** the high-voltage distributor (20; 40) comprises at least one first surface (41) which is intended to rest on a housing wall (2a) and has at least one passage opening via which the high-voltage distributor (20; 40) is screwed to the housing wall (2a) in order to secure the high-voltage distributor in the housing (2); and/or
(b) **in that** the high-voltage distributor according to Claim 6 is fastened to the housing (2) by means of the two limbs (37) of the carrier device (23) such that that region of the carrier device (23) which has the holding devices (34) is arranged opposite the removably designed part (38) of the housing wall (2a).

9. A utility vehicle comprising a high-voltage distributor according to one of Claims 1 to 5 and/or comprising a traction energy storage device according to one of Claims 6 to 8.

## Revendications

1. Distributeur de haute tension (20 ; 40) pour un véhicule hybride ou électrique, comprenant un dispositif porteur (23) ;
un arrangement conducteur (24a, 24b, 30a, 30b) disposé sur le dispositif porteur (23) et servant à la distribution de courant et de tension afin de former plusieurs départs de haute tension (12a) ;
plusieurs dispositifs de maintien (34) disposés sur le dispositif porteur (23), lesquels sont respectivement associés à un départ de haute tension (12a) et peuvent être équipés d'un élément de protection à haute tension (22), le départ de haute tension (12a) ne pouvant pas être mis sous tension si un dispositif de maintien (34) associé n'est pas équipé ;
**caractérisé en ce que** les dispositifs de maintien (34) possèdent une dimension modulaire, de sorte que les dispositifs de maintien (34) peuvent être équipés d'éléments de protection à haute tension (22) de différentes formes et/ou tailles de modèle, et **en ce que** la dimension modulaire est réalisée sous la forme d'un modèle perforé (31) qui est incorporé dans le dispositif porteur (23) .

2. Distributeur de haute tension (20 ; 40) selon la revendication 1, **caractérisé en ce que** l'arrangement conducteur (24a, 24b, 30a, 30b) est disposé sur un premier côté du dispositif porteur (23) et **en ce que** les dispositifs de maintien (34) sont réalisés de telle sorte que le dispositif porteur (23) peut être équipé et/ou est équipé d'éléments de protection à haute tension (22) sur le côté du dispositif porteur (23) à l'opposé du premier côté.

3. Distributeur de haute tension (20 ; 40) selon la revendication 1 ou 2, **caractérisé en ce que** le modèle perforé (31) est un modèle perforé linéaire qui est dimensionné de telle sorte que des éléments de protection à haute tension (22) de différentes catégories de forme peuvent être fixés au dispositif de maintien (34).

4. Distributeur de haute tension (20 ; 40) selon l'une des revendications précédentes, **caractérisé en ce que** le dispositif porteur (23) présente une section transversale en forme de U avec une partie centrale (29) et des branches latérales (37), les dispositifs de maintien (34) étant disposés au niveau de la partie centrale entre les branches latérales (37) sur le côté de la partie centrale depuis lequel s'étendent les branches (37).

5. Distributeur de haute tension (20 ; 40) selon l'une des revendications précédentes, **caractérisé en ce**
(a) **que** l'arrangement conducteur (21) est réalisé sous la forme d'un arrangement de barre-bus et d'un système de circuit imprimé ; et/ou
(b) **que** le dispositif porteur (23) possède une pièce moulée ; et/ou
(c) **que** le dispositif porteur (23) est réalisé sous la forme d'une platine et que l'arrangement conducteur (21) est réalisé sous la forme de pistes conductrices de la platine ; et/ou
(d) **que** les éléments de protection à haute tension (22) possèdent des fusibles, notamment de préférence des fusibles de sécurité, et/ou des éléments de protection à semiconducteur.

6. Dispositif d'accumulation d'énergie de traction (1) pour un véhicule hybride ou électrique, comprenant un module d'accumulation (5) destiné à accumuler de l'énergie électrique,
un boîtier de contacteur (4) relié au module d'accumulation ; et
un distributeur de haute tension (20 ; 40) selon l'une des revendications précédentes, lesquels sont intégrés dans un boîtier (2) du dispositif d'accumulation d'énergie de traction (1), plusieurs bornes à haute tension (12) disposées dans le boîtier (2) étant reliées électriquement avec le distributeur de haute tension (20 ; 40) et/ou avec le boîtier de contacteur (4).

7. Dispositif d'accumulation d'énergie de traction selon la revendication 6, **caractérisé en ce**
(a) **que** le distributeur de haute tension (20 ; 40) selon l'une des revendications 2 à 5 est disposé dans la zone d'une paroi de boîtier (2a), le côté du dispositif porteur (23) qui peut être équipé des éléments de protection à haute tension (22) faisant face à la paroi de boîtier (2) ; et
(b) **que** cette paroi de boîtier (2a) ou au moins une partie (38) de celle-ci est réalisée amovible.

8. Dispositif d'accumulation d'énergie de traction selon la revendication 7, **caractérisé en ce**
(a) **que** le distributeur de haute tension (20 ; 40) comporte au moins une première surface (41) conçue pour reposer sur une paroi de boîtier (2a), ladite première surface possédant au moins une ouverture traversante par le biais de laquelle le distributeur de haute tension (20 ; 40) est fixé par vissage à la paroi de boîtier (2a) afin de bloquer le distributeur de haute tension dans le boîtier (2) ; et/ou
(b) **que** le distributeur de haute tension selon la revendication 6 est fixé au boîtier (2) au moyen des deux branches (37) du dispositif porteur (23) de telle sorte que la zone du dispositif porteur (23) qui possède les dispositifs de maintien (34) est disposée à l'opposé de la partie (38) réalisée amovible de la paroi de boîtier (2a) .

9. Véhicule utilitaire comprenant un distributeur de haute tension selon l'une des revendications 1 à 5 et/ou comprenant un dispositif d'accumulation d'énergie de traction selon l'une des revendications 6 à 8.
